# EUROPÄISCHE PATENTSCHRIFT

(11) **EP 0 803 184 B1**
(45) Veröffentlichungstag und Bekanntmachung des Hinweises auf die Patenterteilung: **17.07.2002**
(21) Anmeldenummer: 97105666.8
(22) Anmeldetag: 05.04.1997
(51) Int. Cl.: A01F 15/10, A01D 89/00

(54) **Aufnehmer**
Pick-up
Ramasseur

(30) Priorität: 27.04.1996 DE 19616999
(43) Veröffentlichungstag der Anmeldung: 29.10.1997
(73) Patentinhaber: DEERE & COMPANY, Moline, Illinois 61265-8098 (US)
(72) Erfinder: Engel, Manfred, 66484 Winterbach 2 (DE); Bellaire, Karl-Heinz, 66497 Contwig (DE)
(74) Vertreter: Magin, Ludwig Bernhard

(56) Entgegenhaltungen:
- EP-A- 0 064 112
- DE-A- 3 719 845
- DE-U- 29 611 444

## Beschreibung

Die Erfindung betrifft einen Aufnehmer einer Erntemaschine mit einem Aufsammelförderer und einem Zwischenförderer, der das Fördergut in der Förderrichtung zusammenführt.

Der Prospekt WOLVO Columbia R10 - R12 "Serie 2000" offenbart eine Rundballenpresse mit einem vorgeschalteten Aufnehmer, der breiter ist als die Einlaßbreite des Preßraums. Der Aufnehmer ist an seinem Aufnahmeende mit mehreren Reihen überkopf fördernder Zinken versehen, die Erntegut vom Boden aufnehmen und es auf einem Förderboden nach hinten dem Preßraum zufördern. Im Anschluß an den Wirkbereich der Zinken sind an jeder Seite Schnecken vorgesehen, die das Erntegut zur Mitte des Aufnehmers drängen. In Gutflußrichtung gesehen folgt auf die Schnecken in dem zwischen ihnen begrenzten Raum ein weiterer Rotationsförderer mit Zinken, die durch Schlitze in einem zweiten Förderboden nach oben hindurchtreten und das Erntegut in den Preßraum fördern.

Bei diesem Aufnehmer ist es als nachteilig anzusehen, daß drei unterschiedliche Förderer ineinandergreifen, was Übergabe- und Übergangsprobleme verursachen kann.

Aus der US-A-4,766,717 ist eine Rundballenpresse bekannt, bei der sich an eine Zinkenpick-up ein Schneidwerk anschließt, das eine Welle mit halbkreisförmigen, beabstandeten, in Umfangsrichtung versetzten und unterhalb des Förderbodens gelagerten Messern aufweist, wobei die Messer wiederum durch Schlitze in dem Förderboden aus diesem nach oben austreten und das Erntegut oberschlächtig fördern. Parallel zu dieser Welle und oberhalb des Förderbodens verläuft ein ebenfalls Messer aufweisender Zinkenrotor, der das Erntegut zwangsweise an den unteren Messern vorbeiführt. Ein Zusammenführen des Ernteguts zur Pressenmitte findet nicht statt.

Der Zinkenrotor und die Welle mit den Messern begrenzen zwischen sich einen Spalt, der einer behinderungsfreien Beförderung des Guts entgegenstehen kann.

Die EP-A2-0 470 356 lehrt einen Aufnehmer einer Erntemaschine mit einem Aufsammelförderer, der Gut vom Boden aufnimmt und es entlang einer Förderfläche zu einer Weiterverarbeitungvorrichtung gibt, deren Breite geringer ist als die des Aufsammelförderers und einen sich an diesen stromabwärts anschließenden Rotationsförderer. Der Rotationsförderer besteht aus einem Rotor mit endseitig aufgesetzten gegensinnig verlaufenden Schneckenwendeln, die zwischen sich einen Mittenbereich mit mehreren axial verlaufenden Stegen begrenzen, dessen Breite im wesentlichen der Breite der Einlaßöffnung des Preßraums entspricht. Der Rotationsförderer dient gleichzeitig als Starterwalze und ist daher in seinem Mittenbereich relativ glatt ausgebildet; außerdem ragt er relativ weit nach oben über den den Aufnehmer verlassenden Förderboden. Da dieser Rotor zugleich als Starterrolle wirkt, befindet er sich nicht vor, sondern in dem Preßraum.

Dieser Rotationsförderer dient primär der Bildung eines Ballenkerns, nimmt aber keine regelrechte Förderfunktion wahr.

Gemäß der EP-A1-0 286 776 ist eine Rundballenpresse mit einem Aufsammelförderer, einer sogenannten Pick-Up, versehen, die breiter ist als der in der Rundballenpresse vorhandene Preßraum. Um das aufgenommene Erntegut auf die Breite des Preßraums zu bringen, ist auf jeder Seite des Aufsammelförderers in dessen rückwärtigem Bereich ein oberschlächtig fördernder, schnell umlaufender und schneckenartig ausgebildeter Abweiser vorgesehen. Mit diesen Abweisern ist es zwar möglich, das Erntegut zur Mitte zu lenken - in dem zwischen ihnen liegenden Bereich findet allerdings keine aktive Förderung statt.

Schließlich ist aus der EP-B-0 064 112 ein Aufnehmer einer Rundballenpresse bekannt, bei dem ebenfalls auf einem gemeinsamen Rotor endseitige Schneckenabschnitte und ein mittlerer Förderabschnitt vorgesehen sind, wobei der mittlere Förderabschnitt Förderzinken aufweist, die in das Erntegut eingreifen und es zwangsweise in den Preßraum fördern.

Der Nachteil dieser Lösung ist darin zu sehen, daß durch die unterschlächtige Förderung eine Erntegutverdichtung auftritt, die zu Förderstaus führen kann.

Das der Erfindung zugrunde liegende Problem wird darin gesehen, eine gleichmäßige und störungsfreie Gutförderung zu erreichen.

Dieses Problem wird erfindungsgemäß durch die Lehre des Patentanspruchs 1 bzw. 13 gelöst, wobei in den weiteren Patentansprüchen Merkmale aufgeführt sind, die die Lösung in vorteilhafter Weise weiterentwickeln.

Auf diese Weise werden Förderprobleme vermieden, da die Überkopfförderung eine Verdichtung vermeidet und die Mitnehmer eine aggressive Förderung bewirken. Dadurch, daß der wenigstens eine Endbereich und der Mittenbereich Teile eines einzigen Zwischenförderers sind, werden sie auch als eine Einheit angetrieben und erstrecken sich um dieselbe Drehachse, was Übergabeprobleme vermeidet, Antriebsmittel reduziert und nur wenig Einbauraum bedarf.

Während bei einer Presse, egal welcher Bauart, die Weiterverarbeitungsvorrichtung von einem Preßraum bzw. dessen Preßelementen gebildet wird, wird diese bei einem Mähdrescher von den Dresch- oder Förderorganen und bei einem Feldhäcksler von dem Einzugs- oder Häckselaggregat gebildet.

Anstatt eines einzigen Endbereichs können auch an jedem Ende des rotierenden Zwischenförderers ein Endbereich für diesen Zweck gebildet bzw. genutzt werden.

Wenn sich der Mittenbereich und aufgrund der gemeinsamen Anordnung auch der oder die Endbereiche unterhalb der Förderfläche befinden und die Mitnehmer die Förderfläche durch Spalte und/oder Schlitze durchdringen, wird das Fördergut an der Förderfläche abgestreift, sobald sich die Mitnehmer hinter deren Oberfläche zurückziehen.

Die Verwendung eines schneckenartigen Endbereichs macht es möglich, mit einfachen Mitteln und bei einer hohen Drehzahl, das Erntegut seitlich kraftvoll abzulenken. Die vorgeschlagene Wanne bewirkt überdies, daß Bröckelgut nicht auf den Boden zurückfällt, sondern von dem nachfolgenden Fördergut mitgenommen wird.

Da das Bröckelgut evtl. sehr klein ist und nicht von alleine aus der Wanne mitgerissen wird, ist es hilfreich, wenn wenigstens ein Mitnehmer die Wanne durchstreift und dabei das darin befindliche Gut mitnimmt.

Die Lagerung des Mitten- und des Endbereichs auf einer gemeinsamen Welle im Gegensatz zu mehreren kurzen Wellen und auch auf einer gemeinsamen Achse stellt eine Vereinfachung des Lageraufwands dar, da evtl. nur ein einziges Lager auf jeder Seite erforderlich ist.

Eine gemeinsame direkt oder über ein Getriebe wirkende Antriebsquelle für den Endbereich und den Mittenbereich reicht aus, wenn diese auf einer gemeinsamen Welle drehfest angeordnet sind. Ein derartiger Antrieb läßt sich um so einfacher verwirklichen, wenn auch die Geschwindigkeit dieselbe ist. Allerdings kann auch die Anwendung unterschiedlicher Geschwindigkeiten sinnvoll sein, um z. B. das Fördergut effektiver zu der Mitte des Gutstroms hin abzulenken, während die Geschwindigkeit in der Mitte der sonstigen Geschwindigkeit des Gutstroms angepaßt ist.

Mittels eines Abstreifers kann insbesondere unter feuchten Bedingungen, wie sie bei der Förderung von nassem Gras auftreten, verhindert werden, daß sich dieses um den Endbereich wickelt und den gesamtem Aufnehmer verstopft und dann sogar beschädigt. Der Abstreifer befindet sich z. B. an einer Seitenoder Rückwand des Aufnehmers und erstreckt sich bis an dessen Schneckenwendel.

Mit einem Niederhalter ist es möglich, das Fördergut in Anlage an dem Endbereich des Zwischenförderers zu halten, so daß es zuverlässig mitgenommen und zur Gutstrommitte geleitet wird.

Mittels eines Versatzes zwischen den inneren und den äußeren Mitnehmern kann erreicht werden, daß die Gutmatte nicht schubweise von dem Mittenbereich angenommen und evtl. zerrissen wird, sondern kontinuierlich wandert. Gegebenenfalls können auch mehrere äußere Mitnehmer schraubenlinienförmig angeordnet werden.

Auch die Abstimmung der Geschwindigkeit des Mittenbereichs des Zwischenförderers auf die Geschwindigkeit des Aufsammelförderers und z. B. die von Walzen zum Bilden des Preßraums verhindert ein Zusammenschieben und Auseinanderziehen der Fördergutmatte, so daß diese quasi als eine Einheit über den Aufnehmer zum Preßraum gelangt; dies trägt zu einer kontinuierlichen Förderung bei.

Wenn die Förderfläche zweiteilig ausgebildet ist und deren rückwärtiger Förderabschnitt Schlitze für die Mitnehmer enthält, kann der vordere Teil des Aufnehmers relativ einfach und schnell von dem rückwärtigen für Wartungsarbeiten entfernt werden. Die Ausbildung als Platte sorgt für einen störungsfreien Transport und verhindert das Entfallen von Erntegut.

Die Verwendung des erfindungsgemäßen Aufnehmers ist bei einer Ballenpresse, und zwar insbesondere bei einer Festkammerrundballenpresse, sehr vorteilhaft, weil dort eine einwandfreie Gutförderung zu dem Preßraum mittels des Zwischenförderers erreicht werden muß, während bei anderen Erntemaschinen weitere Förderer vorgesehen sind, die das Gut weiterfördern.

In der Zeichnung ist ein nachfolgend näher beschriebenes Ausführungsbeispiel der Erfindung dargestellt. Es zeigt:
- Fig. 1: eine Erntemaschine in Seitenansicht und schematischer Darstellung mit einem erfindungsgemäßen Aufnehmer,
- Fig. 2: den Aufnehmer aus Figur 1 in Draufsicht,
- Fig. 3: den Aufnehmer und einen Aufnahmebereich der Erntemaschine in Seitenansicht,
- Fig. 4: den Aufnehmer nach einem Schnitt entlang der Linie 4-4 in Figur 2 und in der Blickrichtung der dazugehörigen Pfeile mit einem Abstreifer und einen Niederhalter.

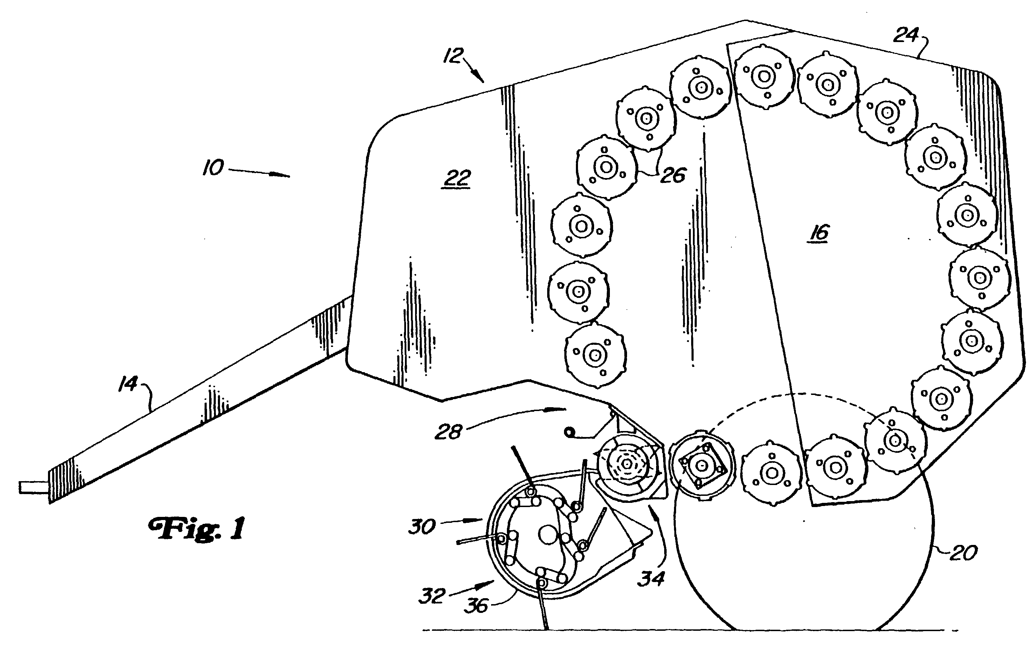

Figur 1 zeigt eine Erntemaschine 10 mit einem Chassis 12, einer Deichsel 14, einem Preßraum 16 und einem erfindungsgemäßen Aufnehmer 18.

Die Erntemaschine 10 ist in der Art einer Rundballenpresse mit einem festen Preßraum 16 ausgebildet; allerdings wäre es auch möglich, die Erfindung an einer Rundballenpresse mit variablem Preßraum oder an einem Feldhäcksler, Mähdrescher, Mähgerät, einer Rechteckballenpresse, einer Großballenpresse oder dergleichen zu verwenden. Außerdem kann jegliche Presse zusätzlich mit einem Schneidwerk bestückt sein.

Das Chassis 12 stützt sich über Räder 20 auf dem Boden ab und setzt sich aus einem Vorderteil 22 und einer Heckklappe 24 mit entsprechenden nicht näher bezeichneten Seitenwänden zusammen, wie dies bekannt ist.

Die Deichsel 14 erstreckt sich von dem Chassis aus nach vorne und dient der Verbindung mit einem Zugfahrzeug, z. B. einem Ackerschlepper, die die Erntemaschine 10 über ein Feld zieht, um dort nach dem Mähen abgelegtes Gut wie Heu, Stroh oder Gras aufzunehmen.

Der Preßraum 16 steht stellvertretend für eine Weiterverarbeitungseinrichtung und wird im vorliegenden Ausführungsbeispiel von einer Vielzahl von Walzen 26 umgeben, deren Mittelund somit Drehpunkte im wesentlichen auf einem Kreis liegen. Bei einer als Rundballenpresse mit variablem Preßraum 16 ausgebildeten Erntemaschine 10 kann dieser von Riemen, Ketten oder beweglichen Walzen umgeben sein. Selbstverständlich können auch bei einer Festkammerpresse anstatt der Walzen 26 Riemen oder Ketten verwendet werden. Ein Teil der Walzen 26 ist in dem Vorderteil 22 und ein Teil in der Heckklappe 24 drehbar gelagert. Der Preßraum 16 ist in seinem unteren vorderen Bereich zur Bildung einer Einlaßöffnung 28 offen, indem dort eine Walze 24 ausgelassen ist, um von dem Aufnehmer 18 aufgelesenes Erntegut aufnehmen zu können.

Der Aufnehmer 18 setzt sich aus einer Förderfläche 30, einem Aufsammelförderer 32 und einem Zwischenförderer 34 zusammen, die vorzugsweise zu einer Einheit zusammengefaßt und als solche vertikal geschwenkt werden können. Der Aufnehmer 18 ist breiter als die Einlaßöffnung 28 des Preßraums 16. Die Aufgabe des Aufnehmers 18 besteht darin, auf dem Boden liegendes gemähtes und gegebenenfalls gedroschenes Gut aufzunehmen und nach hinten über die Förderfläche 30 zu dem Preßraum 16 zu bringen, wobei der Gutstrom auf eine geringere Breite zusammengedrückt wird.

Die Förderfläche 30 besteht aus einem vorderen Förderabschnitt 36 und einem rückwärtigen Förderabschnitt 38, die beide so ausgebildet und angeordnet sind, daß das aufgenommene Gut auf ihrer Oberseite bis zu dem Preßraum 16 gleiten kann.

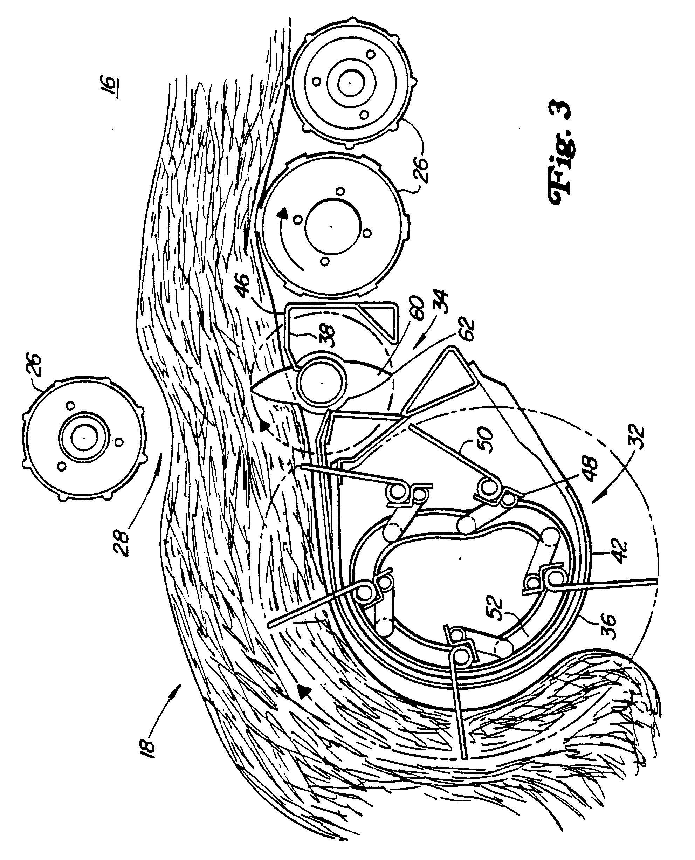

Der vordere Förderabschnitt 36 wird von einer Vielzahl nebeneinander angeordneter und einen Spalt 40 zwischen sich belassender Blechstreifen 42 gebildet, die sich gemäß Figur 3 von unterhalb des Aufsammelförderers 32 nach vorne und oben bis zu dem Zwischenförderer 34 bogenförmig erstrecken.

Der rückwärtige Förderabschnitt 38 besteht aus einer in ihrem Vorderbereich mit Schlitzen 44 versehenen Platte 46, wobei die Spalte 40 und die Schlitze 44 miteinander fluchten.

Wenn auch beide Förderabschnitte 36 und 38 in dem bevorzugten Ausführungsbeispiel voneinander getrennt ausgebildet und angeordnet sind, so könnten beide aber auch als ein einzelner Teil hergestellt werden.

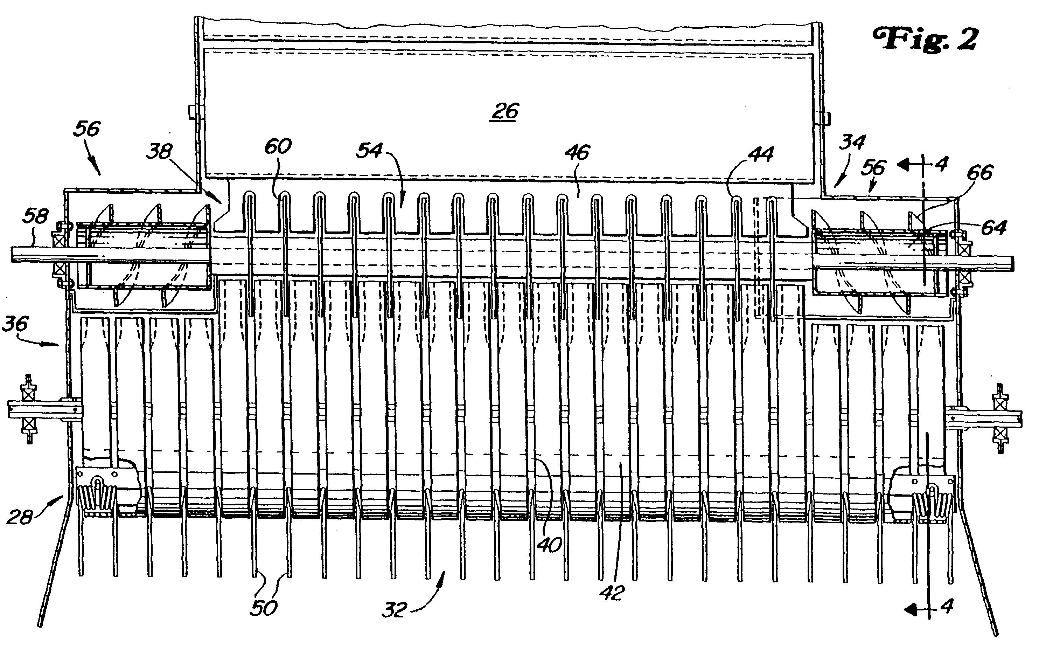

Wie sich insbesondere mit Blick auf Figur 2 ergibt, nimmt der vordere Förderabschnitt 36 jedenfalls in seinem vorderen und in Figur 2 unten gelegenen Bereich die Breite des Aufsammelförderers 32 und der rückwärtige Förderabschnitt die Breite der Einlaßöffnung 28 ein.

Der Aufsammelförderer 32 ist in herkömmlicher Weise ausgebildet, d. h. auf mehreren quer zur Fahrtrichtung angeordneten Schienen 48 sind Zinken 50 montiert, und die Schienen 48 werden mit Blick auf die Figuren 1 und 3 im Uhrzeigerdrehsinn entlang einer Kurvenbahn 52 bewegt. Die Zinken 50 erstrecken sich während dieser Umlaufbewegung durch die Spalte 40 und nehmen dabei unterschiedliche Stellungen gegenüber den Blechstreifen 42 ein, wobei sie das Fördergut kurz vor dem Erreichen des Zwischenförderers 34 an den Blechstreifen 42 abstreifen und an den Zwischenförderer 34 übergeben. Die Ausbildung eines derartigen Aufsammelförderers 32, der auch als Pick-Up bezeichnet wird, ist bekannt und bedarf daher keiner weiteren Ausführungen.

Der Zwischenförderer 34 ist sehr gut in Figur 2 ersichtlich und besteht aus einem Mittenbereich 54 und in diesem Ausführungsbeispiel aus zwei Endbereichen 56. In einem anderen Ausführungsbeispiel kann auch nur ein einziger Endbereich 56 vorgesehen werden.

Eine Besonderheit des Zwischenförderers 34 besteht darin, daß der Mittenbereich 54 und der bzw. die Endbereiche 56 gemeinsam auf einer Welle 58 gelagert und somit gemeinsam in Drehbewegung versetzt werden können.

Eine andere Besonderheit ist darin zu sehen, daß sich die Drehund somit die Mittenachse des Zwischenförderers 34 unterhalb der Förderfläche 30, bzw. unterhalb einer die beiden Förderabschnitte 36 und 38 verbindenden Fläche erstreckt und der Zwischenförderer 34 daher oberschlächtig fördert, wobei die Welle 58 mit Blick auf Figur 3 und gemäß dem dort angegebenen Pfeil im Uhrzeigerdrehsinn dreht.

Der Mittenbereich 54 weist als weiteres Merkmal eine Vielzahl auf der Welle 58 nebeneinander angeordneter Mitnehmer 60 auf, die gemäß Figur 3 zwei diametral zueinander angeordnete gleich ausgebildete Zinken 62 enthalten. Der Abstand der Mitnehmer 60 entspricht dem Abstand der Spalte 40 bzw. der Schlitze 44 und die Länge bzw. der Abstand der Welle 58 zu den Förderabschnitten 36 und 38 ist so gewählt, daß die Zinken 62 in ihrer senkrechten Lage nahezu ganz über den rückwärtigen Förderabschnitt 38 hinausragen. Die Größe der Schlitze 44 ist so gewählt, daß sie nur einen geringen Spalt zu den Zinken 62 belassen, so daß das Fördergut am Eingang zu dem Preßraum 16 einwandfrei abgestreift werden kann. In dem bevorzugten Ausführungsbeispiel sind sechzehn Mitnehmer 60 vorgesehen, was aber nur beispielhaft ist. Während bei dem gezeigten Ausführungsbeispiel alle Zinken 62 miteinander fluchten, d. h. die Spitzen der Zinken 62 aneinander ausgerichtet sind, können nach einem nicht dargestellten Ausführungsbeispiel die äußeren Mitnehmer 60 gegenüber den verbleibenden inneren Mitnehmern 60 versetzt sein, um eine kontinuierliche Förderung des Guts zur Mitte zu erreichen, im Gegensatz zu einer evtl. schubweisen Förderung.

Die Umfangsgeschwindigkeit des Aufsammelförderers 32 und des Zwischenförderers 34 ist vorzugsweise die gleiche, so daß ein synchroner Umlauf erfolgt, was bewirkt, daß die geförderte Gutmatte gleichförmig weitergegeben und nicht auseinander gerissen wird.

Die Außendurchmesser des Mittenbereichs 54 und der Endbereiche 56 sind zwar nicht identisch, aber von so geringem Unterschied, daß Übergangsprobleme nicht entstehen können.

Um die Mitnehmer 60 mit Abstand zueinander auf der Welle 58 zu befestigen, ist zwischen ihnen jeweils eine Hülse 78 aus Metall oder Kunststoff auf die Welle 58 aufgesetzt. Die Verbindung der Mitnehmer 60 mit der Welle 58 erfolgt entweder form- oder reibschlüssig.

Die Endbereiche 56 sind in der Art oberschlächtig fördernder Schnecken ausgebildet, die - da sie auf der gleichen Welle 58 befestigt sind - ebenfalls mit Blick auf Figur 3 im Uhrzeigerdrehsinn drehen. Die Ausbildung ist so getroffen, daß ein Schneckenrohr 64 ca. zwei Drittel des Gesamtdurchmessers des Endbereichs 56 einnimmt, während Schneckenwendel 66 nur ein Drittel einnehmen. Folglich und in Verbindung mit der oberschlächtigen Förderung, wirken die Endbereiche 56 weniger als Schnecke sondern mehr als Abweiser, die das ankommende Fördergut zur Mitte hin ablenken. Derartige Abweiser sind aus der EP-A1-0 286 776 bekannt. Die Schneckenwendel 66 der jeweiligen Endbereiche 56 verlaufen gegensinnig zueinander. Figur 2 verdeutlicht auch, daß sich die Endbereiche 56 von der Außenseite des Aufsammelförderers 32 bis geringfügig in den von den Seitenwänden des Preßraums 16 begrenzten Raum hinein erstrecken.

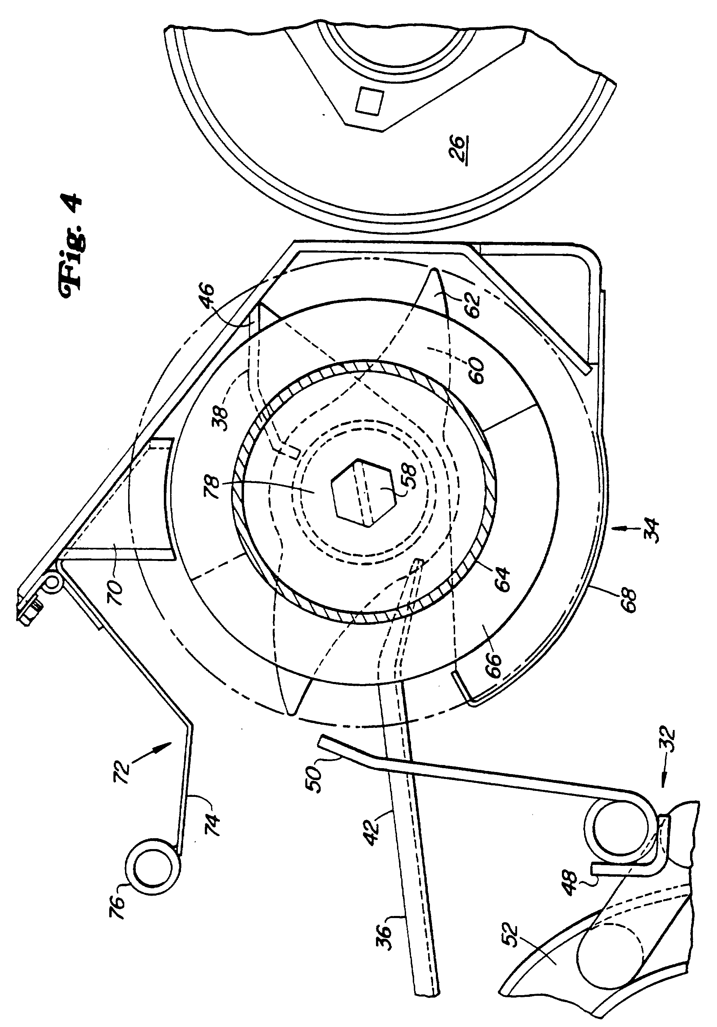

Wie sich insbesondere mit Blick auf Figur 4 ergibt, befindet sich unterhalb jedes Endbereichs 56 eine Wanne 68, die die Endbereiche 56 teilumfangsmäßig umgibt. Diese Wanne 68 hat den Zweck, bei bröckelndem Fördergut, z. B. sehr trockenem Heu, den Verlust von hochwertigem Futter zu vermeiden, das ansonsten auf den Boden fallen würde und verloren wäre. Die Vorderkante der Wanne 68 endet auf der Ebene des vorderen Förderabschnitts 36. Oberhalb der Wanne 68 befindet sich ein Abstreifer 70, der von oben bis an die Schneckenwendel 66 heranreicht und verhindert, daß evtl. Fördergut von den nach oben drehenden Endbereichen 56 mitgenommen wird und zu Staus oder Wickelproblemen führt.

Die Oberseite des rückwärtigen Förderabschnitts 38 folgt nach einem Winkel von mehr als 45 und weniger als 90 Grad auf den Abstreifer 70. Auf diese Weise wird der Wirkwinkel der Endbereiche 56 nicht zu sehr begrenzt und die Übergabe zu dem Mittenbereich 54 erfolgt problemlos.

Nach einer nicht gezeigten aber ebenfalls vorteilhaften Weiterbildung des erfindungsgemäßen Aufnehmers 18 erstrecken sich die Wannen 68 weiter nach innen, d. h. zu der Längsmittenebene des Aufnehmers 18 als das Schneckenrohr 64 und die Schneckenwendel 66. Der sich dadurch ergebende Raum in der Wanne 68 ist so groß, daß der jeweils letzte Mitnehmer 60 des Mittenbereichs 54 durch die Wanne 68 streift und darin befindliches Bröckelgut auswirft.

Figur 4 zeigt zusätzlich einen Niederhalter 72, der aus einer vertikal schwenkbar an das Chassis 12 oder eine Wand des Aufnehmers 18 angeschlossenen Klappe 74 und in diesem Fall aus einem Gewicht 76 besteht.

Die Klappe 74 ist nahe ihrer Mitte abgekröpft und enthält somit einen ebenen und einen ansteigenden Abschnitt. Während das Gewicht 76 an der Vorderkante des ebenen Abschnitts angeschweißt oder sonstwie befestigt ist, greift der rückwärtige scharnierartig an dem Chassis 12 oder dem Aufnehmer 18 um eine waagrechte Welle schwenkbar an. Anstelle des Gewichts 76 könnte auch eine Feder oder dergleichen vorgesehen sein, um die Klappe 74 nach unten und zu der Umfangsfläche des jeweiligen Endbereichs 56 zu bewegen. Mittels des Niederhalters 72 wird somit erreicht, daß das Fördergut nicht nach oben geschleudert wird und stets in Eingriff mit den Schneckenwendeln 66 bleibt, was zu einer wirksamen Seitwärtsförderung hin zur Mitte führt.

Zwischen dem inneren Ende der Schneckenwendel 66 und der Spitze des jeweils zugeordneten Zinkens 62 ist ein Winkel von ca 0 ± 30 Grad gegeben.

Die Bemessung der einzelnen Winkel und das Verhältnis des Schneckenrohrs 64 und der Schneckenwendel 66 hat zur Folge, daß die gesamte Seitwärtsbewegung des Förderguts nach einer halben bis einer ganzen Umdrehung des Zwischenförderers 34 erfolgt ist.

Die Geschwindigkeit des Aufsammelförderers 32, des Zwischenförderers 34 und der Walzen 26 ist gleich oder im wesentlichen gleich, so daß auch bei der Ballenbildung an der Einlaßöffnung 28 keine Annahmeprobleme auftreten. Aufgrund dieser Abstimmung der Geschwindigkeiten und eines zwischen dem Zwischenförderer 34 und der Einlaßöffnung 28 bestehenden Abstandes wird auch gewährleistet, daß die Bildung eines Ballens störungsfrei erfolgt und um einen fertigen Ballen gewundenes Netz nicht in Eingriff mit dem Zwischenförderer 34 gerät, was dessen Zerstörung verhindert.

Entgegen den obigen Ausführungen könnten der Mittenbereich 54 und die Endbereiche 56 auch trotz ihrer Lagerung auf der gleichen Welle 58 mit unterschiedlichen Geschwindigkeiten angetrieben werden.

Anstatt der direkten Befestigung der Mitnehmer 60 auf der Welle 58 und der Einfügung von Hülsen 78 zwischen ihnen könnte auch ein Rohr verwendet werden, auf dessen Umfangsfläche die Mitnehmer 60 aufgeschweißt werden.

## Patentansprüche

1. Aufnehmer (18) einer Erntemaschine (10) mit einem Aufsammelförderer (32), der Gut vom Boden aufnimmt und es entlang einer Förderfläche (30) zu einer Weiterverarbeitungsvorrichtung gibt, deren Breite geringer ist als die des Aufsammelförderers (32), und mit einem überkopffördernden Zwischenförderer (34) **stromaufwärts einer Einlaßöffnung (28) der Weiterverarbeitungsvorrichtung** zum Überbrücken der unterschiedlichen Breiten mit wenigstens einem axial fördernden Endbereich (56) und einem Mittenbereich (54) mit sich radial erstreckenden einen **axialen** Abstand zueinander aufweisenden **zinkenartigen** Mitnehmern (60).

2. Aufnehmer nach Anspruch 1, **dadurch gekennzeichnet, daß** sich die Mittenachse des Zwischenförderers (34) unterhalb der Förderfläche (30) befindet und sich die Mitnehmer (60) durch Spalte (40) und Schlitze (44) in der Förderfläche (30) nach oben erstrecken.

3. Aufnehmer nach Anspruch 1 oder 2, **dadurch gekennzeichnet, daß** die Endbereiche (56) schneckenförmig ausgebildet und teilweise in Wannen (68) vorgesehen sind, die sich unterhalb der Förderfläche (30) befinden.

4. Aufnehmer nach einem oder mehreren der vorherigen Ansprüche, **dadurch gekennzeichnet, daß** wenigstens ein Mitnehmer (60) in die Wanne (68) eingreifen.

5. Aufnehmer nach einem oder mehreren der vorherigen Ansprüche, **dadurch gekennzeichnet, daß** der Mitten- und der Endbereich (54, 56) auf einer gemeinsamen Welle (58) gelagert sind.

6. Aufnehmer nach einem oder mehreren der vorherigen Ansprüche, **dadurch gekennzeichnet, daß** der Mitten- und der Endbereich (54 und 56) von einer gemeinsamen Antriebsquelle und vorzugsweise mit derselben Geschwindigkeit antreibbar sind.

7. Aufnehmer nach einem oder mehreren der vorherigen Ansprüche, **dadurch gekennzeichnet, daß** dem Endbereich (56) ein Abstreifer (70) zugeordnet ist.

8. Aufnehmer nach einem oder mehreren der vorherigen Ansprüche, **dadurch gekennzeichnet, daß** oberhalb des Endbereichs (56) ein vorzugsweise vertikal schwenkbarer Niederhalter (72) vorgesehen ist.

9. Aufnehmer nach einem oder mehreren der vorherigen Ansprüche, **dadurch gekennzeichnet, daß** ein oder mehrere dem Endbereich (56) zugelegene Mitnehmer (60) gegenüber den übrigen Mitnehmern (60) in der Umfangsrichtung versetzt sind.

10. Aufnehmer nach einem oder mehreren der vorherigen Ansprüche, **dadurch gekennzeichnet, daß** die Geschwindigkeit des Zwischenförderers (34) mit der stromab- und stromaufwärts auf das Fördergut einwirkenden Geschwindigkeit übereinstimmt.

11. Aufnehmer nach einem oder mehreren der vorherigen Ansprüche, **dadurch gekennzeichnet, daß** die Förderfläche (30) zweiteilig ausgebildet ist und ein rückwärtiger Förderabschnitt (38) als eine Platte (46) ausgebildet ist, in der die Schlitze (44) vorgesehen sind.

12. Aufnehmer nach einem oder mehreren der vorherigen Ansprüche, **dadurch gekennzeichnet, daß** die Fördergeschwindigkeit des Mitten- und des Endbereichs (54 und 56) unterschiedlich sind.

13. Verwendung eines Aufnehmers (18) nach einem oder mehreren der vorherigen Patentansprüche zur Zufuhr von Erntegut in eine Ballenpresse, insbesondere in eine Rundballenpresse nach dem Festkammerprinzip.

## Claims

1. A pick-up (18) of a harvesting machine (10) with a collecting conveyor (32) which picks up the crop from the ground and passes it along a conveyor surface (30) to a further processing device whose width is smaller than that of the collecting conveyor (32), and with an overshot intermediate conveyor (34) upstream of an inlet opening (28) of the further processing device for bridging over the different widths, with at least one axially feeding end region (56) and a middle region (54) with radially extending tine-like entraining members (60) axially spaced from one another.

2. A pick-up according to claim 1, **characterized in that** the central axis of the intermediate conveyor (34) lies below the conveyor surface (30) and the entraining members (60) extend up through gaps (40) and slots (44) in the conveyor surface (30).

3. A pick-up according to claim 1 or 2, **characterized in that** the end regions (56) are formed as augers and are provided partially in pans (68) which are located below the conveyor surface (30).

4. A pick-up according to one or more of the preceding claims, **characterized in that** at least one entraining member (60) engages in the pan (68).

5. A pick-up according to one or more of the preceding claims, **characterized in that** the middle and end regions (54, 56) are mounted on a common shaft (58).

6. A pick-up according to one or more of the preceding claims, **characterized in that** the middle and end regions (54 and 56) can be driven from a common drive source and preferably at the same rate.

7. A pick-up according to one or more of the preceding claims, **characterized in that** a stripper (70) is associated with the end region (56).

8. A pick-up according to one or more of the preceding claims, **characterized in that** a holddown (72), which can preferably pivot vertically, is provided above the end region (56).

9. A pick-up according to one or more of the preceding claims, **characterized in that** one or more of the entraining members (60) adjacent the end region (56) are offset in the circumferential direction relative to the other entraining members (60).

10. A pick-up according to one or more of the preceding claims, **characterized in that** the speed of the intermediate conveyor (34) matches the speed acting on the conveyed crop downstream and upstream.

11. A pick-up according to one or more of the preceding claims, **characterized in that** the conveyor surface (30) is formed in two parts and a rear conveyor section (38) is formed as a plate (46), in which the slots (44) are provided.

12. A pick-up according to one or more of the preceding claims, **characterized in that** the conveyor speeds of the middle and end regions (54 and 56) are different.

13. Use of a pick-up (18) according to one or more of the preceding claims for feeding crop into a baler, especially a round baler according to the fixed chamber principle.

## Revendications

1. Ramasseur (18) d'une moissonneuse (10) comportant'un convoyeur de collecte (32), qui ramasse la récolte sur le sol et l'envoie le long d'une surface de convoyage (30) à un dispositif de traitement aval, dont la largeur est inférieure à celle du convoyeur de collecte (32), et comportant un convoyeur intermédiaire (34), qui réalise un convoyage en surplomb, en amont d'une ouverture d'entrée (28) du dispositif de traitement aval, pour couvrir les différentes largeurs avec au moins une partie d'extrémité (56) réalisant un convoyage axial, et une partie médiane (54) comportant des organes d'entraînement en forme de dents (60), qui s'étendent radialement et sont séparées les unes des autres par une certaine distance axiale.

2. Ramasseur selon la revendication 1, **caractérisé en ce que** l'axe médian du convoyeur intermédiaire (34) est situé au-dessous de la surface de convoyage (30) et que les organes d'entraînement (60) s'étendent vers le haut à travers des fentes (40) et des interstices (44) formés dans la surface de convoyage (30).

3. Ramasseur selon la revendication 1 ou 2, **caractérisé en ce que** les parties d'extrémité (56) sont agencées en forme de vis et sont prévues en partie dans des cuvettes (68), qui sont situées au-dessous de la surface d'entraînement (30).

4. Ramasseur selon une ou plusieurs des revendications précédentes, **caractérisé en ce qu'**au moins un organe d'entraînement (60) s'engage dans la cuvette (68).

5. Ramasseur selon une ou plusieurs des revendications précédentes, **caractérisé en ce que** la partie médiane et la partie d'extrémité (54, 56) sont montées sur un arbre commun (58).

6. Ramasseur selon une ou plusieurs des revendications précédentes, **caractérisé en ce que** la partie médiane et la partie d'extrémité (54 et 56) peuvent être entraînées par une source d'entraînement commune et de préférence à la même vitesse.

7. Ramasseur selon une ou plusieurs des revendications précédentes, **caractérisé en ce qu'**un racloir (70) est associé à la partie d'extrémité (56).

8. Ramasseur selon une ou plusieurs des revendications précédentes, **caractérisé en ce qu'**au-dessus de la partie d'extrémité (56), il est prévu un dispositif de serrage (72) qui peut pivoter de préférence verticalement.

9. Ramasseur selon une ou plusieurs des revendications précédentes, **caractérisé en ce qu'**un ou plusieurs organes d'entraînement (60), qui sont ajoutés à la partie d'extrémité (56), sont décalés par rapport aux autres organes d'entraînement (60) dans la direction circonférentielle.

10. Ramasseur selon une ou plusieurs des revendications précédentes, **caractérisé en ce que** la vitesse du convoyeur intermédiaire (34) coïncide avec la vitesse qui agit en amont et en aval sur la matière convoyée.

11. Ramasseur selon une ou plusieurs des revendications précédentes, **caractérisé en ce que** la surface de convoyage (30) est formée de deux parties et qu'une section arrière d'entraînement (38) est agencée sous la forme d'une plaque (46), dans laquelle sont prévus les interstices (44).

12. Ramasseur selon une ou plusieurs des revendications précédentes, **caractérisé en ce que** les vitesses de convoyage de la partie médiane et de la partie d'extrémité (54 et 56) sont différentes.

13. Utilisation d'un ramasseur (18) selon une ou plusieurs des revendications précédentes, pour amener la matière récoltée dans une presse à balles notamment dans une presse à balles cylindriques, selon le principe à chambre fixe.
